# EUROPEAN PATENT SPECIFICATION

(11) **EP 2 702 912 B1**
(45) Date of publication and mention of the grant of the patent: **30.03.2016**
(21) Application number: 12181873.6
(22) Date of filing: 27.08.2012
(51) Int. Cl.: A47J 43/07

(54) **Kitchen device with working tool**
Küchenvorrichtung mit Arbeitsgerät
Dispositif de cuisine avec outil de travail

(43) Date of publication of application: 05.03.2014
(73) Proprietor: BSH Hausgeräte GmbH, 81739 München (DE)
(72) Inventor: Cater, Matej, 3301 Petrovce (SI); Mazej, Stanislav, 3303 Gomilsko (SI); Zilnik, Marko, 1218 Komenda (SI)

(56) References cited:
- GB-A- 2 470 914
- GB-A- 2 480 302
- US-A1- 2006 171 251
- US-A1- 2012 081 993
- US-A1- 2012 120 755

## Description

### FIELD OF THE INVENTION

The present invention relates to a motor driven kitchen device according to the preamble of Claim 1. It further relates to the use of the working tool according to Claim 14.

### BACKGROUND OF INVENTION

Motor driven kitchen devices are in addition to other functions regularly used for stirring or beating processed food. There are many tools that use the planetary action of the mixing tool for such stirring or beating. With any mixing in a motor driven kitchen device and probably even more so in a device using planetary action, the ingredients, that is the processed food, tend to be pushed toward the inner surface of the processing vessel. If the processed food is sticky, this amounts to a common problem of such devices where the processed food sticks to inner surface of the vessel which in turn reduces the effectiveness of stirring or beating. The ingredients stuck to inner surface of the vessel remain unprocessed or partly processed if they cannot be reintegrated into the processed mass. Even if they are eventually reintegrated, the results of the processing may be insufficiently homogeneous or the time of processing is significantly increased.

There are several approaches that have been used to solve this problem. The simplest approach is to stop the motorized device and scrape the processed food off the inner surface of the vessel manually, using a spatula, a knife or a similar device. This is obviously very inconvenient as it requires increased attention by the user and increased time of processing. In addition, it may result in damage to the vessel or kitchen device and even present a risk of injury. This is especially critical in case this action is attempted during operation of the kitchen device.

Another approach, as described in US4946285 and US6932503, has been to introduce an additional rod- or finger-like extension depending from the drive head that is intended to scrape off the adhering ingredients. It is very hard to fit these rods closely to the inner surface of the vessel and provide satisfactory results if the rods are very rigid. On the other hand, they can interfere with the operation of the mixing tool if the rods are too flexible, especially when processing denser ingredients such as dough.

There have been several solutions that introduced an automatic scraping action into the mixing or beating tool. Most of these solutions use the approach to add a scraper tool to the existing stirrer or beater attachment in the region that is in close proximity to the inner surface of the vessel. The scraping tool is generally made of a softer material (e.g. rubber) and is designed in a way that it touches the inner surface of the vessel during operation thus providing a scraping action that removes ingredients that are stuck to the surface. Such solutions are described in patents GB 483800, US2318534, EP1883467 (A2).

These and similar applications mostly describe solutions where the scraper is inserted into a groove in the arms of the mixing or beating tool and is removable. Other solutions include molded attachments, e.g. US7314308 where the scraping tool is molded onto the arm of the mixer or beater. The same patent US7314308 also describes a recessed region of the scraper tool that is positioned in the center of rotation to facilitate the bending of the flexible material of the scraper in different directions.

US8616763 describes a mixing beater, comprising a metallic frame including an arm, a plastic shell extending over the arm, and only one scraper, the one scraper including a cover piece extending over the plastic shell and a wiping blade extending from the cover piece, the wiping blade being configured to contact an inner surface of a mixing bowl, wherein the wiping blade includes (a base secured to the cover piece, a curved outer edge spaced apart from the base, a first surface extending between the base and the curved outer edge, and a rib extending outwardly from the first surface.

The described solutions, however, do not address another problem that commonly arises. The processed food that has been scraped off the inner surface of the vessels has a tendency to stay in the vicinity of the inner surface of the wall and stick to it again quickly. This problem is not addressed to our knowledge in any of the existing solutions as the primary focus seems to be simply on introducing a scraping mechanism. This mechanism does significantly improve the performance of the mixing or beating tools, but the problem as outlined above remains. In addition to solving this problem it would also be beneficial if the efficiency of basic operations such as kneading and mixing could be improved as well without significant additional costs by extending the solutions pertaining to the scraping action.

### OBJECT UNDERLYING THE INVENTION

The object underlying the present invention is to provide an improved working tool for the use in motor driven kitchen devices that allows for scraping of the processed food adhering to the inner surface of the processing vessel during processing and at the same time improves positioning of the processed food as well as other functions of the working tool such as mixing, kneading and similar functions.

### SOLUTION ACCORDING TO THE INVENTION

The solution to the object underlying the invention is achieved through introduction of a working tool for a motor driven kitchen device that includes a scraper sector for scraping the food off the walls of the kitchen device vessel during processing resulting in better and more uniform processing as well as at least one spatula sector that provides additional functions of the working tool such as improved positioning of the processed food, mixing, kneading, etc.

The working tool according to this invention comprises a clutch adapted to couple the working tool to a corresponding motor clutch of the kitchen device, a firm frame with at least one arm that, in combination with the rotational movement of the working tool, follows closely the inner surface of the kitchen device vessel and a molded attachment that is molded in substantial length onto at least the first arm of the working tool, which during rotation is in close proximity to the inner surface of the vessel. The molded attachment not only provides the scraping action, but also performs other functions such as improved positioning of the processed food, mixing, kneading, etc.

The scraping action is achieved by the scraper sector of the molded attachment that extends from the first arm of the firm frame towards the direction of the inner surface of the vessel. It is designed to provide direct contact with the inner surface of the vessel and/or with processed food adhering to it. The other functions are performed by introducing a spatula sector that is a part of the molded attachment extending in the opposite direction, towards the clutch of the working tool. This spatula sector can be designed in various shapes in order to facilitate positioning of the processed food during processing, kneading, mixing and other action or any combination thereof.

### PREFERRED EMBODIMENTS OF THE INVENTION

According to an embodiment of the invention, the working tool comprises one or more additional arms that are positioned substantially aligned with the first arm but closer to the clutch. The first arm is the arm in close proximity of the inner wall of the vessel which includes the scraper sector of the molded attachment. Additional arms comprise a molded attachment with at least one, preferably two, spatula sectors which provide additional functions such as kneading, mixing, positioning of the processed food, etc.

In a further variant of the above embodiment of the invention, second and further arms of the firm frame have molded attachments with spatula sectors molded onto them both in the direction towards the inner surface of the vessel and towards the clutch of the working tool. The form of such a molded attachment is significantly similar to the scraper/spatula attachment on the first arm closest to the inner surface of the vessel.

It is preferred, that all additional arms are substantially of the same shape as the first arm, only downsized accordingly. The down-sizing is required due to the geometry of the working tool wherein the allowable length of arms that increases with the distance from the clutch. Increasing of the length of the second and further arms could present a hindrance during the rotation of the working tool.

According to an embodiment, the material used for producing the firm frame of the working tool is preferably steel The firm frame, comprising all arms, is preferably produced by stamping of a single flat sheet of steel.

According to an embodiment, the material used for production of the molded attachment, comprising the scraper sector and spatula sector or alternatively, at least one spatula sector, is preferably silicone.

It is preferred in an embodiment of the invention, that the scraper sector has a cross-section profile of an extended conical shape. This cross-section shape is substantially maintained along the length of the narrow flexible longitudinal tip of the scraper sector. As a result, the general shape of the scraper sector provides contact with every portion of the designated contact area of the inner surface of the vessel during operation of the working tool. The designated area includes all areas from the bottom of the vessel up to a designated height in the side walls of the vessels according to the geometry of the vessel and the rotating working tool. Care must be taken, that the whole bottom of the vessel comes into contact with the scraper sector of the working tool during rotation.

Similarly to the scraping sector described in the previous paragraph, the spatula sector or sectors preferentially have a longitudinal tip wherein its cross-section profile is either of a conical shape, elliptical shape, has multiple protrusions or any combination thereof, said sector or sectors extending between 2 and 20 mm from the arm of the firm frame towards the clutch.

The working tool according to another embodiment comprises the scraper sector wherein the central section of the scraper sector at the tip of the working tool extends substantially less from the first arm towards the inner surface of the vessel, so that this section does not touch the inner surface of the vessel during operation. This effectively creates two separate parts of the scraper sector. One part is attached to the part of the first arm that protrudes to the left of the axis of rotation of the working tool extending from the clutch to the tip of the working tool. The other part of the scraper sector is attached to the part of the first arm protrudes to the right of this axis, that is at an angle 180° in relation to the first arm. The space between allows for bending of the described parts of the scraper sector in opposite directions relative to the first arm of the working tool. This bending is a result of rotation and of the forces produced from the contact with the inner surface of the vessel. Omitting this space would result in shearing forces at the tip of the working tool since the scraper sector would be bending in opposite directions at this point. This would result in substantially increased wear and damage of the scraper section.

According to an embodiment of the invention, the distance between tips of two spatula sectors on adjacent arms can be fixed or variable along the length of the spatula sectors along the arms in the range of 3 to 30 mm. The variations of this feature can be used to improve various functions required in the stirring or beating process, such as improved as improved mixing of ingredients, kneading, positioning of processed food and/or other.

In a further embodiment each molded attachment is molded onto an arm of the firm frame as a single entity. That is the molded is integrally molded to the firm frame.

According to an embodiment of the invention, each molded attachment is molded onto an arm in a way that the molded attachment cannot move in regard to its respective arm. Therefore, the molded attachment as a whole or a part thereof cannot be removed from or moved as a whole in respect to the arm that it is attached to, provided that it is used according to the intended use of the working tool. This, of course, in no way precludes the desired movement of the tips of the molded attachment during operation as described above but not limited only to the described modes of movement.

Further embodiments of the working tool include molded attachments that are optionally profiled in the scraper sector and/or spatula sectors to enhance their efficiency. These modifications may be introduced in order to modify the performance of both the scraper sector and/or the spatula sectors to adjust to the materials used, type of processed foods, shapes of the arms or the vessel, etc. The modifications include but are not limited to ribs to improve scraping action, waves or other protrusions to modify the spatula action, utilization of narrow passages formed by closely positioned spatula sector on adjacent arms to increase forces applied to the processed food, directional skewing of scraping or spatula sector for repositioning of processed food, and similar.

### BRIEF DESCRIPTION OF THE DRAWINGS

The invention is explained in more detail below on the basis of an exemplary embodiment and with reference to the figures.

The figures schematically depict:
Figure 1: A bowl with the working tool (the rest of the kitchen device not shown).
Figure 2: A working tool with molded attachment.
Figure 3: A cross-section of the first arm with molded attachment.

### DETAILED DESCRIPTION

Advantageous embodiments and developments which can be used individually or in combination with one another are the subject matter of the dependent claims.

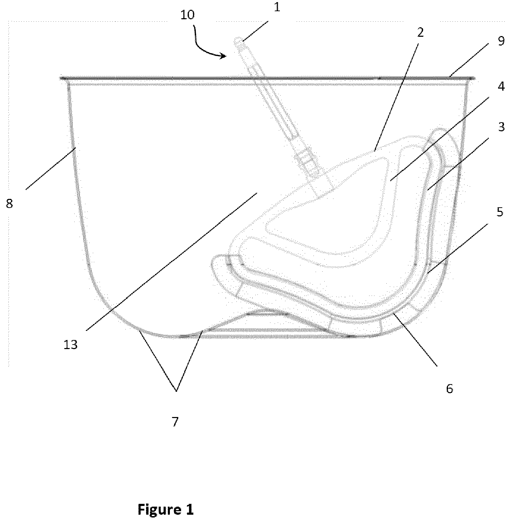

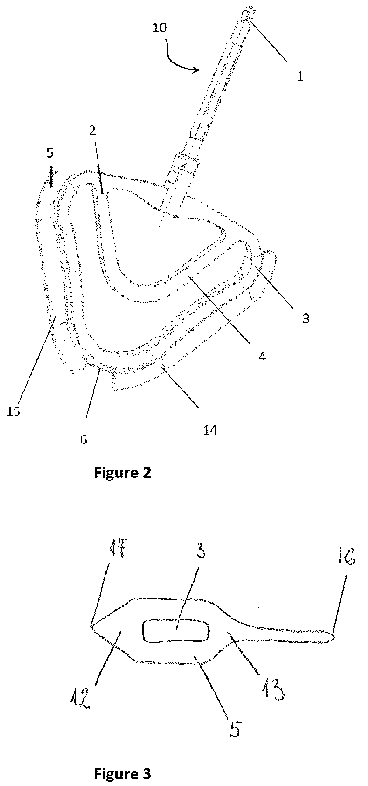

Fig. 1 shows a setting where the working tool 10 is arranged into an operating position within the vessel 9 of the motor driven kitchen device (the rest of the kitchen device is not shown). A planetary drive is used to provide the rotation of the working tool 10. The working tool 10 is connected to the drive of the kitchen machine through the clutch 1 at the top of the figure (drive not shown). The bottom part of the working tool 10 comprises a firm frame 2 that is made of steel in this embodiment; however the use of other materials suitable for use in kitchen devices is also possible. The firm frame 2 is made by stamping the shape of the frame from a single flat sheet of steel. The thickness of the sheet used may be between 1 and 4 mm. The firm frame 2 which further comprises two arms: the first arm 3, which is in close proximity to the inner surface 8 of the vessel 9, and the second arm 4 which is positioned substantially aligned with the first arm 3, yet relatively downsized do to spatial requirements. Molded onto the first arm 3 is the molded attachment 5 which is made of silicone. The molded attachment 5 may be made of silicone with different degrees or hardness or any other material suitable for use in kitchen devices that exhibits an appropriate degree of flexibility. The molded attachment 5 molded onto the first arm 3 comprises two sectors. The first sector is the scraper sector 11 that extends from the first arm 3 in the direction towards the inner surface 8 of the vessel 9, that is in the direction away from the clutch 1. The length of extension of the scraper sector 11 can be between 10 and 30 mm in order to achieve close contact of the tip of the scraper sector 16 (shown in more detail in figure 3) with the inner surface 8 of the vessel 9. This contact is the basis of the desired scraping action of the working tool 10. The shape of the firm frame 2 and the first arm 3 is chosen so as to closely follow the contour of the inner surface 8 of the vessel 9 including the bottom 7 of the vessel 9. The working tool 10 follows the described contour continuously during operation, that is during the rotation in combination with planetary movement of the working tool 10. As a result, the complete inner surface 8 of the vessel 9 comes into contact with the scraper sector 11 periodically. The second sector of the molded attachment 5 molded onto the first arm 3 of the firm frame 2 is the spatula sector 12. The spatula sector 12 extends from the first arm 3 in the opposite direction of the scraper sector 11, that is towards the clutch 1 and at the same time towards the center space 13 of the vessel 9. The spatula sector 12 is made of the same material as the scraper sector 11 as they are made simultaneously and as a single entity. The second arm 4 does not have a molded attachment 5 in this embodiment, however the same procedure can be used for molding a molded attachment 5 onto the second arm 4 and optional further arms in other embodiments. These molded attachments 5 comprise one or more spatula sectors 12 that can be of different shapes or sizes to provide further functions of the working tool 10, such as the positioning of the processed food, improved mixing, kneading and similar. Spatula sector or sectors 12 can extend by between 2 and 20 mm from the second or further arms 4 of the firm frame 2.

Fig. 2 shows the working tool 10 in some more detail. The central section 6 of the scraper sector 11 is clearly visible. The central section 6 is a section of the scraper sector 11, where the molding does not extend as far toward the inner surface 8 of the vessel 9 as it is the case in the rest of the molding attachment 5 on the first arm 3. The width of the molding in the central section 6 as measured from the edge of the firm frame 2 of the first arm 3 is only 1 to 5 mm as opposed to 10 to 30 mm length in the rest of the scraper sector 11. As a result, the molding attachment 5 does not touch the inner surface 8 of the bowl 9 in this central section 6. This effectively divides the unitary molded attachment 5 into two parts 14, 15. These two parts 14, 15 of the scraper sector 11 are therefore able to bend freely in opposite direction during operation of the working tool 10. The central section 6 allows for this free movement and prevents increased frictional or shearing forces in the central region of the molded attachment 5 which would result in an increased wear of materials.

Finally, Figure 3 shows a cross-section of the first arm 3 of the working tool 10 with a molded attachment 5. The molded attachment 5 comprises the scraper sector 11 and the spatula sector 12. The scraper sector 11 is of an extended conical shape and has the length between 10 and 30 mm as measured from the edge of the first arm 3. The conical shape ends in a scraper tip 16. In turn, the scraper tip 16 spans longitudinally along the whole length of the molded attachment 5 (apart from the central section 6 as described before) and thus forms a ridge-like form that provides the scraping function of the working tool 10. On the opposite side of the first arm 3, the spatula sector 12 is positioned extending from the first arm 3 towards the direction of the clutch 1 and towards the central space 13 of the vessel 9. The cross-section design of the spatula sector 12 is in a conical form with a rounded and spatula tip 17 in this embodiment but can assume various forms according to the desired effect. It also extends longitudinally along the whole molded attachment 5, as described in the case of the scraper sector 11. The length of the spatula sector 12 as measured from the end of the first arm 3 can be between 2 and 20 mm.

### List of references

- 1: Clutch
- 2: Firm frame
- 3: First arm
- 4: Second arm
- 5: Molded attachment
- 6: Central section of the scraper sector (11)
- 7: Bottom
- 8: Inner surface of the vessel (9)
- 9: Vessel
- 10: Molded attachment
- 11: Scraper sector
- 12: Spatula sector
- 13: Center space of the vessel (9)
- 14: Part of the scraper sector (11)
- 15: Part of the scraper sector (11)
- 16: Scraper tip
- 17: Spatula tip

## Claims

1. A motor driven kitchen device comprising a vessel (9) and a working tool (10) that is adapted to be rotationally driven, said working tool (10) further comprising:
- a clutch (1) adapted to couple the working tool (10) to a corresponding motor clutch of the kitchen device;
- a firm frame (2) with at least one arm (3, 4) that, depending on the rotational movement of the working tool (10), follows closely the inner surface (8) of the kitchen device vessel (9);
- a molded attachment (5) molded in substantial length onto the first arm (3) of the firm frame (2), which during rotation is in close proximity to the inner surface (8) of the vessel (9)
**characterized in that** the molded attachment (10) comprises a scraper sector (11) and a spatula sector (12), said scraper sector (11) extending from the first arm (3) of the firm frame (2) towards the direction of the inner surface (8) of the vessel (9) providing direct contact with the inner surface (8) of the vessel (9) and/or with processed food adhering to it, and said spatula sector (12) having a longitudinal spatula tip (17) extending by 2 - 20 mm from the first arm (3) in the opposite direction, towards the clutch (1) of the working tool (10).

2. The kitchen device according to claim 1 **characterized in that** said working tool (10) comprises one or more additional arms (4) that are positioned substantially aligned with the first arm (3) but closer to the clutch (1).

3. The kitchen device according to claim 2 **characterized in that** the second and further arms (4) of the firm frame (2) of the working tool (10) optionally have molded attachments (5) with spatula sectors (12) molded onto them both in the direction towards the inner surface (8) of the vessel (9) and towards the clutch (1) of the working tool (10).

4. The kitchen device according to any of the preceding claims **characterized in that** all additional arms (4) of the working tool (10) are substantially of the same shape as the first arm (3), only downsized accordingly.

5. The kitchen device according to any of the preceding claims **characterized in that** the material used for the firm frame (2) is preferably steel and that the firm frame (2) is preferably produced by stamping of a single flat sheet of steel.

6. The kitchen device according to any of the preceding claims **characterized in that** the material used for the scraper sector (11) and spatula sector or sectors (12) is preferably silicone.

7. The kitchen device according to any of the preceding claims **characterized in that** the scraper sector (11) has a cross-section profile of an extended conical shape forming a narrow flexible longitudinal scraper tip (16) that provides contact with every portion of the designated contact area of the inner surface (8) of the vessel (9) during operation of the working tool (10).

8. The kitchen device according to any of the preceding claims **characterized in that** the scraper sector (11) comprises a central section (6) that extends substantially less, preferably between 1 and 5 mm, from the first arm (3) towards the vessel (9), so that said central section (6) does not touch the inner surface (8) of the vessel (9) during operation, thus effectively creating two separate parts (14, 15) of the scraper sector (11) with space in between to allow for bending of these parts (14, 15) in opposite directions as a result of rotation and contact with the inner surface (8) of the vessel (9).

9. The kitchen device according to any of the preceding claims **characterized in that**, the cross-section profile of the spatula tip (17) is preferably of a conical shape, elliptical shape, has multiple protrusions or any combination thereof.

10. The kitchen device according to any of the preceding claims **characterized in that**, the distance between tips (17) of two spatula sectors (12) on adjacent second or further arms (4) can be fixed or variable along the length of the spatula sectors (12) along the said arms (4) in the range of 3 to 30 mm.

11. The kitchen device according to any of the preceding claims **characterized in that**, each molded attachment (5) is molded onto an arm (3, 4) of the firm frame (2) of the working tool (10) as a single entity.

12. The kitchen device according to any of the preceding claims wherein each molded attachment (5) is molded onto an arm (3, 4) such that the molded attachment (5) cannot move in regard to its respective arm (3, 4).

13. The kitchen device according to any of the preceding claims **characterized in that**, the molded attachment or molded attachments (5) are optionally profiled in the scraper sector (11) and/or spatula sector or sectors (12).

## Patentansprüche

1. Motorbetriebenes Küchengerät, welches ein Gefäß (9) und ein Arbeitswerkzeug (10), welches dazu eingerichtet ist, drehangetrieben zu werden, umfasst, wobei dieses Arbeitswerkzeug (10) ferner umfasst:
- eine Kupplung (1), die dazu eingerichtet ist, das Arbeitswerkzeug (10) mit einer entsprechenden Motorkupplung des Küchengerätes zu kuppeln;
- einen festen Rahmen (2) mit wenigstens einem Arm (3, 4), der sich, in Abhängigkeit von der Drehbewegung des Arbeitswerkzeugs (10), nahe entlang der Innenfläche (8) des Gefäßes (9) des Küchengerätes bewegt;
- ein geformtes Anbauteil (5), welches auf einer beträchtlichen Länge an den ersten Arm (3) des festen Rahmens (2) angeformt ist und sich während der Drehung in nahem Abstand von der Innenfläche (8) des Gefäßes (9) befindet,
**dadurch gekennzeichnet, dass** das geformtes Anbauteil (10) einen Schabersektor (11) und einen Spachtelsektor (12) umfasst, wobei sich der Schabersektor (11) von dem ersten Arm (3) des festen Rahmens (2) aus in der Richtung der Innenfläche (8) des Gefäßes (9) erstreckt und dabei einen direkten Kontakt mit der Innenfläche (8) des Gefäßes (9) und/oder mit verarbeiteten Lebensmitteln, die an ihr haften, gewährleistet und der Spachtelsektor (12) eine longitudinale Spachtelspitze (17) aufweist, die sich von dem ersten Arm (3) aus 2 - 20 mm in der entgegengesetzten Richtung zu der Kupplung (1) des Arbeitswerkzeugs (10) hin erstreckt.

2. Küchengerät nach Anspruch 1, **dadurch gekennzeichnet, dass** das Arbeitswerkzeug (10) einen oder mehrere zusätzliche Arme (4) umfasst, welche im Wesentlichen auf den ersten Arm (3) ausgerichtet, jedoch näher an der Kupplung (1) positioniert sind.

3. Küchengerät nach Anspruch 2, **dadurch gekennzeichnet, dass** der zweite und die weiteren Arme (4) des festen Rahmens (2) des Arbeitswerkzeugs (10) optional angeformte Anbauteile (5) mit an sie angeformten Spachtelsektoren (12) sowohl in der Richtung zu der Innenfläche (8) des Gefäßes (9) hin als auch zu der Kupplung (1) des Arbeitswerkzeugs (10) hin aufweisen.

4. Küchengerät nach einem der vorhergehenden Ansprüche, **dadurch gekennzeichnet, dass** alle zusätzlichen Arme (4) des Arbeitswerkzeugs (10) im Wesentlichen von derselben Form wie der erste Arm (3) sind, nur mit entsprechend verringerten Abmessungen.

5. Küchengerät nach einem der vorhergehenden Ansprüche, **dadurch gekennzeichnet, dass** das für den festen Rahmen (2) verwendete Material vorzugsweise Stahl ist, und dass der feste Rahmen (2) vorzugsweise durch Pressen eines einzigen flachen Stahlbleches hergestellt ist.

6. Küchengerät nach einem der vorhergehenden Ansprüche, **dadurch gekennzeichnet, dass** das für den Schabersektor (11) und den Spachtelsektor oder die Spachtelsektoren (12) verwendete Material vorzugsweise Silikon ist.

7. Küchengerät nach einem der vorhergehenden Ansprüche, **dadurch gekennzeichnet, dass** der Schabersektor (11) ein Querschnittsprofil von einer gestreckten konischen Form aufweist, das eine schmale, flexible longitudinale Schaberspitze (16) bildet, welche während des Betriebs des Arbeitswerkzeugs (10) einen Kontakt mit jedem Abschnitt des vorgesehenen Kontaktbereiches der Innenfläche (8) des Gefäßes (9) gewährleistet.

8. Küchengerät nach einem der vorhergehenden Ansprüche, **dadurch gekennzeichnet, dass** der Schabersektor (11) einen mittleren Abschnitt (6) umfasst, welcher sich wesentlich weniger weit, vorzugsweise zwischen 1 und 5 mm, von dem ersten Arm (3) zu dem Gefäß (9) hin erstreckt, so dass dieser mittlere Abschnitt (6) während des Betriebs nicht die Innenfläche (8) des Gefäßes (9) berührt und somit gewissermaßen zwei getrennte Teile (14, 15) des Schabersektors (11) mit einem Zwischenraum dazwischen erzeugt, um zu ermöglichen, dass diese Teile (14, 15) infolge der Rotation und des Kontakts mit der Innenfläche (8) des Gefäßes (9) in entgegengesetzte Richtungen gebogen werden.

9. Küchengerät nach einem der vorhergehenden Ansprüche, **dadurch gekennzeichnet, dass** das Querschnittsprofil der Spachtelspitze (17) vorzugsweise von einer konischen Form oder elliptischen Form ist, mehrere Vorsprünge aufweist oder einer beliebigen Kombination davon entspricht.

10. Küchengerät nach einem der vorhergehenden Ansprüche, **dadurch gekennzeichnet, dass** der Abstand zwischen Spitzen (17) von zwei Spachtelsektoren (12) an benachbarten zweiten oder weiteren Armen (4) fest oder variabel entlang der Länge der Spachtelsektoren (12) entlang dieser Arme (4) im Bereich von 3 bis 30 mm sein kann.

11. Küchengerät nach einem der vorhergehenden Ansprüche, **dadurch gekennzeichnet, dass** jedes geformte Anbauteil (5) an einen Arm (3, 4) des festen Rahmens (2) des Arbeitswerkzeugs (10) als ein einheitliches Gebilde angeformt ist.

12. Küchengerät nach einem der vorhergehenden Ansprüche, wobei jedes geformte Anbauteil (5) an einen Arm (3, 4) derart angeformt ist, dass sich das geformte Anbauteil (5) nicht in Bezug auf seinen jeweiligen Arm (3, 4) bewegen kann.

13. Küchengerät nach einem der vorhergehenden Ansprüche, **dadurch gekennzeichnet, dass** das geformte Anbauteil oder die geformten Anbauteile (5) optional in dem Schabersektor (11) und/oder dem Spachtelsektor oder den Spachtelsektoren (12) profiliert ist bzw. sind.

## Revendications

1. Dispositif de cuisine entraîné par moteur, comprenant un récipient (9) et un outil de travail (10) qui est conçu pour être entraîné en rotation, ledit outil de travail (10) comprenant en outre :
- un organe d'accouplement (1) conçu pour accoupler l'outil de travail (10) à un organe d'accouplement moteur correspondant du dispositif de cuisine ;
- un cadre rigide (2) comportant au moins un bras (3, 4) qui, comme suite au mouvement de rotation de l'outil de travail (10), suit de près la surface interne (8) du récipient (9) du dispositif de cuisine ;
- un accessoire moulé (5) moulé sur l'essentiel de sa longueur sur le premier bras (3) du cadre rigide (2), qui pendant la rotation est en étroite proximité de la surface interne (8) du récipient (9)
**caractérisé en ce que** l'accessoire moulé (5) comprend un secteur grattoir (11) et un secteur spatule (12), ledit secteur grattoir (11) dépassant du premier bras (3) du cadre rigide (2) dans la direction de la surface interne (8) du récipient (9), procurant un contact direct avec la surface interne (8) du récipient (9) et/ou avec les aliments transformés qui y adhèrent, et ledit secteur spatule (12) ayant une pointe de spatule longitudinale (17) dépassant de 2 à 20 mm du premier bras (3) dans la direction opposée, vers l'organe d'accouplement (1) de l'outil de travail (10).

2. Dispositif de cuisine selon la revendication 1, **caractérisé en ce que** ledit outil de travail (10) comprend un ou plusieurs bras supplémentaires (4) qui sont positionnés substantiellement en alignement avec le premier bras (3) mais plus près de l'organe d'accouplement (1).

3. Dispositif de cuisine selon la revendication 2, **caractérisé en ce que** le deuxième et les autres bras (4) du cadre rigide (2) de l'outil de travail (10) comportent facultativement des accessoires moulés (5) avec des secteurs spatule (12) moulés sur eux, à la fois dans la direction de la surface interne (8) du récipient (9) et vers l'organe d'accouplement (1) de l'outil de travail (10).

4. Dispositif de cuisine selon n'importe lesquelles des revendications précédentes, **caractérisé en ce que** tous les bras supplémentaires (4) de l'outil de travail (10) ont substantiellement la même forme que le premier bras (3), étant seulement sous-dimensionnés en conséquence.

5. Dispositif de cuisine selon n'importe lesquelles des revendications précédentes, **caractérisé en ce que** le matériau utilisé pour le cadre rigide (2) est de préférence l'acier, et que le cadre rigide (2) est de préférence produit par estampage d'une simple feuille d'acier plate.

6. Dispositif de cuisine selon n'importe lesquelles des revendications précédentes, **caractérisé en ce que** le matériau utilisé pour le secteur grattoir (11) et le secteur ou les secteurs spatule (12) est de préférence la silicone.

7. Dispositif de cuisine selon n'importe lesquelles des revendications précédentes, **caractérisé en ce que** le secteur grattoir (11) possède un profil en section transversale d'une forme conique allongée formant une pointe de grattoir longitudinale (16) souple et étroite qui procure un contact avec chaque partie de la zone de contact visée de la surface interne (8) du récipient (9) pendant le fonctionnement de l'outil de travail (10).

8. Dispositif de cuisine selon n'importe lesquelles des revendications précédentes, **caractérisé en ce que** le secteur grattoir (11) comprend une section centrale (6) qui dépasse substantiellement moins, de préférence d'entre 1 et 5 mm, du premier bras (3) vers le récipient (9), de sorte que ladite section centrale (6) ne touche pas la surface interne (8) du récipient (9) pendant le fonctionnement, créant ainsi efficacement deux parties séparées (14, 15) du secteur grattoir (11) avec un espace entre les deux pour permettre le fléchissement de ces parties (14, 15) dans des directions opposées comme suite à la rotation et au contact avec la surface interne (8) du récipient (9).

9. Dispositif de cuisine selon n'importe lesquelles des revendications précédentes, **caractérisé en ce que** le profil en section transversale de la pointe de spatule (17) est de préférence d'une forme conique, d'une forme elliptique, possède de multiples saillies ou n'importe quelle combinaison de ces formes.

10. Dispositif de cuisine selon n'importe lesquelles des revendications précédentes, **caractérisé en ce que** la distance entre les pointes (17) de deux secteurs spatule (12) sur un deuxième ou d'autres bras (4) adjacents peut être fixe ou variable dans le sens de la longueur des secteurs spatule (12) le long desdits bras (4), dans la gamme allant de 3 à 30 mm.

11. Dispositif de cuisine selon n'importe lesquelles des revendications précédentes, **caractérisé en ce que** chaque accessoire moulé (5) est moulé sur un bras (3, 4) du cadre rigide (2) de l'outil de travail (10) en une seule entité.

12. Dispositif de cuisine selon n'importe lesquelles des revendications précédentes, dans lequel chaque accessoire moulé (5) est moulé sur un bras (3, 4) de telle sorte que l'accessoire moulé (5) ne puisse pas se déplacer par rapport au bras respectif (3, 4).

13. Dispositif de cuisine selon n'importe lesquelles des revendications précédentes, **caractérisé en ce que** l'accessoire moulé ou les accessoires moulés (5) sont facultativement profilés dans le secteur grattoir (11) et/ou le secteur ou les secteurs spatule (12).
